# FASCICULE DE BREVET EUROPEEN

(11) **EP 2 338 258 B1**
(45) Date de publication et mention de la délivrance du brevet: **13.03.2013**
(21) Numéro de dépôt: 09741381.9
(22) Date de dépôt: 08.09.2009
(51) Int. Cl.: H04L 12/701

(54) **Technique de protection dans un réseau de communication en mode connecte de noeuds feuilles d'un arbre point à multipoint**
Verfahren für ein Telekommunikationsnetz im Verbindungsmodus zum Schutz von Blättern eines Punkt zu mehrpunkt Baumes
Technique for protecting leaf nodes of a point-to-multipoint tree in a communication network in connected mode

(30) Priorité: 16.09.2008 FR 0856229
(43) Date de publication de la demande: 29.06.2011
(73) Titulaire: France Télécom, 75015 Paris (FR)
(72) Inventeur: LE ROUX, Jean-Louis, F-22300 Lannion (FR); CHAITOU, Mohamad, F-75018 Paris (FR)
(74) Mandataire: Lecomte, Isabelle
(86) Numéro de dépôt international: PCT/FR2009/051687
(87) Numéro de publication internationale: WO 2010/031945

(56) Documents cités:
- WO-A-01/74001
- US-A1- 2006 159 009
- US-A1- 2006 182 049
- US-A1- 2006 209 787
- US-A1- 2007 019 646
- US-A1- 2007 174 483
- AGGARWAL R ET AL: "Extensions to Resource Reservation Protocol - Traffic Engineering (RSVP-TE) for Point-to-Multipoint TE Label Switched Paths (LSPs); rfc4875.txt" IETF STANDARD, INTERNET ENGINEERING TASK FORCE, IETF, CH, 1 mai 2007 (2007-05-01), XP015052419 ISSN: 0000-0003 cité dans la demande
- LE ROUX (ED) FRANCE TELECOM R AGGARWAL JUNIPER NETWORKS J P VASSEUR CISCO SYSTEMS J L ET AL: "P2MP MPLS-TE Fast Reroute with P2MP Bypass Tunnels; draft-ietf-mpls-p2mp-te-bypass-02.txt" IETF STANDARD-WORKING-DRAFT, INTERNET ENGINEERING TASK FORCE, IETF, CH, vol. mpls, no. 2, 1 mars 2008 (2008-03-01), XP015053624 ISSN: 0000-0004 cité dans la demande

## Description

L'invention concerne une technique de protection dans un réseau de communication en mode connecté d'un arbre primaire point à multipoint d'un noeud racine vers des noeuds feuilles, en cas de panne affectant un des noeuds feuilles.

Cette invention se situe dans le domaine des réseaux de communication et plus particulièrement les réseaux de transport de paquets en mode connecté.

Le transport de services tels qu'un service de télévision sur IP, noté IPTV pour "Internet Protocol Television", nécessite des mécanismes d'ingénierie de trafic permettant d'optimiser l'utilisation des ressources, de garantir une qualité de service adaptée au service et de minimiser les temps d'interruption de service en cas de panne. La technologie point à multipoint "Multi-Protocol Label Switching Trafic Engineering", notée P2MP MPLS-TE, est prévue à cet effet. Elle permet d'établir un arbre point à multipoint dans un réseau de communication multi-protocoles à commutation d'étiquettes MPLS avec réservation de ressources. Le protocole associé, tel que spécifié dans le document RFC 4875 issu du groupe IETF, pour "Internet Engineering Task Force", consiste en une extension du protocole RSVP-TE, pour "Resource reSerVation Protocol-Traffic Engineering" et permet l'établissement d'arbres MPLS appelés LSP P2MP dans lesquels les paquets sont acheminés de façon explicite. De tels arbres répliquent le trafic depuis un noeud, appelé noeud racine, vers un ensemble de noeuds, appelés noeuds feuilles, qui sont alors en charge d'acheminer le trafic vers des récepteurs. L'acheminement explicite de type P2MP RSVP-TE permet d'établir des arbres dont les coûts respectifs minimisent la consommation de bande passante ; il permet en outre de réserver des ressources et donc de garantir une qualité de service lors de l'acheminement des paquets.

US 2007/0019646 divulgue la réparation d'un arbre lors d'une panne d'un noeud.

Pour minimiser l'impact d'une panne sur un service et en particulier, pour un service de type IPTV, sur les images télévision, il est nécessaire de pouvoir effectuer un réacheminement des paquets en une durée inférieure à cinquante millisecondes. Le mécanisme P2MP MPLS-TE "Fast Reroute", noté également FRR, tel que spécifié dans le document de l'IETF "draft-ietf-mpls-p2mp-te-bypass-01", repose sur des arbres de secours locaux contournant l'élément protégé ; il permet ainsi de garantir le niveau de sécurisation précité en cas de panne de lien ou de noeud de transit d'un LSP P2MP.

En revanche, il ne permet pas un réacheminement rapide des paquets dans une durée compatible avec des services nécessitant une garantie de qualité de service, en cas de panne d'un des noeuds feuilles d'un arbre à commutation d'étiquettes point à multipoint.

Par la suite, on appelle panne affectant un des noeuds feuilles une panne du noeud lui-même ou une panne d'un lien supportant une branche issue de celui-ci.

Un des buts de l'invention est de remédier à des insuffisances/inconvénients de l'état de la technique et/ou d'y apporter des améliorations.

L'invention a pour objet un procédé de protection dans un réseau de communication en mode connecté d'un arbre primaire point à multipoint entre un noeud racine et des noeuds feuilles primaires du réseau, en cas de panne affectant un des noeuds feuilles primaires selon la revendication 1.

Un noeud est dit protecteur lorsqu'il a reçu la demande de protection en provenance d'un noeud en amont et qu'un noeud feuille primaire lui est connecté directement. Il ajoute dans sa table d'acheminement la règle d'acheminement de secours afin de protéger l'arbre primaire en cas de panne du noeud feuille primaire qu'il protège. La règle d'acheminement de secours ainsi configurée permet d'acheminer le trafic en provenance de la branche primaire en amont vers la branche de secours située en aval et le cas échéant, les branches primaires en aval. Il s'agit dans ce cas de branches primaires non affectées par la panne et n'empruntant pas le même lien physique que la branche de secours en aval. Le trafic acheminé le long de la branche de secours va être diffusé au noeud feuille de secours en aval et ainsi, le cas échéant, qu'à l'ensemble des noeuds feuilles primaires en aval. Le noeud protecteur étant raccordé directement au noeud feuille primaire à protéger, il lui est possible de détecter une panne très rapidement, d'activer la règle d'acheminement de secours et ainsi de poursuivre la diffusion des données dans un délai inférieur à cinquante millisecondes, c'est-à-dire dans un délai compatible avec des services nécessitant une qualité de service élevée. La décision est prise au plus proche du noeud feuille primaire à protéger et ne nécessite pas d'en référer au noeud racine. De plus, le fonctionnement de la partie de l'arbre primaire située en amont du noeud protecteur ayant détecté la panne n'est pas impacté par l'activation de la règle de secours, celle-ci permettant l'acheminement du trafic en aval du noeud protecteur. Lorsqu'un noeud protecteur est passé en mode de secours, on obtient ainsi un arbre point à multipoint hybride dont une première partie en amont de ce noeud protecteur est composée de branches primaires, une deuxième partie en aval de ce noeud protecteur est composée de la branche de secours et une troisième partie en aval de ce noeud protecteur est composée des branches primaires en aval non affectées par la panne. Le noeud protecteur permet le raccordement entre ces trois parties grâce à l'activation de sa règle d'acheminement de secours.

Lors de la détermination des chemins composant l'arbre primaire et les branches de secours, la seule contrainte est d'éviter qu'un noeud feuille de secours soit en amont du noeud feuille primaire qu'il protège.

Ce mécanisme de protection est en outre peu consommateur de ressources sur les noeuds protecteurs, notamment en terme d'états RSVP à maintenir.

Dans un mode de réalisation, une demande d'établissement de la branche de secours est associée à la demande de protection, l'étape de configuration étant effectuée lorsque la branche de secours issue dudit noeud est établie vers un noeud en aval.

La configuration de la règle d'acheminement de secours s'effectue alors lorsque la branche de secours en aval du noeud protecteur est établie.

En outre, une demande d'établissement de l'arbre primaire est associée à la demande de protection, l'étape de configuration étant effectuée lorsqu'au moins une branche primaire issue dudit noeud est établie vers un noeud en aval.

Lors d'une phase de configuration, il est possible de déterminer des chemins composant un arbre global point à multipoint du noeud racine aux noeuds feuilles primaires et de secours. Le calcul du chemin de l'arbre global point à multipoint, encapsulant le trafic de l'ensemble des canaux diffusés, se fait en incluant simultanément les deux ensembles de noeuds feuilles, primaires et de secours, ce qui permet de minimiser le coût, c'est-à-dire le nombre de liens de l'arbre résultant en appliquant un algorithme d'optimisation de coût, par exemple un algorithme de Steiner.

Une fois le chemin de l'arbre global calculé, l'arbre global est établi en suivant les mécanismes définis dans le document RFC 4875 mais en indiquant aux noeuds de l'arbre que la protection des noeuds feuilles primaires doit être activée et en permettant aux noeuds de l'arbre de distinguer le type des noeuds feuilles en aval, primaires ou de secours.

Les établissements de l'arbre primaire et des branches de secours s'effectuent alors conjointement et les ressources sont réservées en conséquence. En effet, sur un lien entre deux noeuds de l'arbre prévu à la fois pour une branche primaire et une branche de secours, des paquets ne sont acheminés que sur une seule des deux branches à un instant donné.

En outre, le procédé comprend une étape de configuration d'au moins une règle d'acheminement secondaire activée, ladite règle visant à acheminer des paquets en provenance d'une branche de secours en amont vers la branche de secours en aval et le cas échéant, des branches primaires en aval.

La ou les règles d'acheminement secondaires permettent d'acheminer des paquets reçus avec une étiquette de secours correspondante vers un noeud feuille de secours en aval dont le noeud feuille primaire n'est pas situé en aval et vers la ou les branches de l'arbre primaire en aval. Ainsi le noeud feuille de secours assure sa fonction de protection du noeud feuille primaire dès que la panne est détectée par un noeud protecteur en amont.

De plus, en cas de détection d'une panne affectant ledit noeud feuille primaire à protéger, le procédé comprend une étape de notification de ladite panne au noeud racine de l'arbre primaire.

Le noeud racine de l'arbre primaire étant informé de la panne affectant un noeud feuille primaire donné, il lui est possible par exemple de superviser la durée de cette panne afin de prendre des actions de maintenance si nécessaire.

L'invention concerne également un noeud protecteur dans un réseau de communication en mode connecté d'un arbre primaire point à multipoint entre un noeud racine et des noeuds feuilles primaires du réseau, en cas de panne affectant un des noeuds feuilles primaires selon la revendication 5.

En outre, le noeud protecteur comprend des moyens de notification, agencés pour envoyer au noeud racine de l'arbre primaire, en cas de détection d'une panne affectant un noeud feuille primaire à protéger, une notification de ladite panne.

L'invention concerne également un système de communication dans un réseau de communication en mode connecté selon la revendication 7.

L'invention concerne en outre un programme d'ordinateur comportant des instructions pour la mise en oeuvre du procédé de protection tel que décrit précédemment par un noeud d'un réseau de communication en mode connecté, lorsque ce programme est exécuté par un processeur.

L'invention sera mieux comprise à l'aide de la description suivante d'un mode de réalisation particulier du procédé de l'invention, en référence aux dessins annexés sur lesquels :
- la figure 1 représente de façon schématique un réseau de communication où est mis en oeuvre le procédé selon l'invention ;
- la figure 2 représente un dispositif selon un mode particulier de l'invention ;

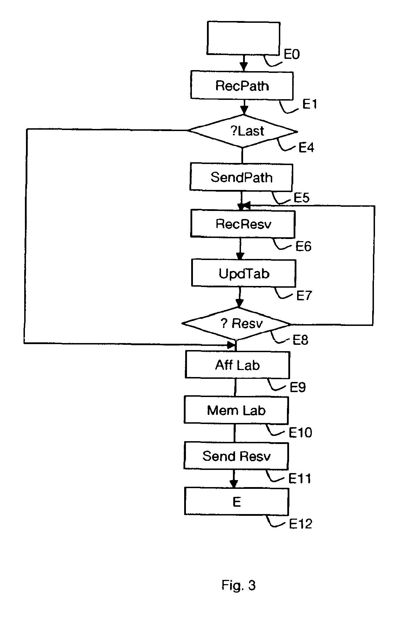

- la figure 3 représente une première phase des étapes du procédé de protection selon un mode particulier de réalisation de l'invention ;
- la figure 4 représente une deuxième phase des étapes du procédé de protection selon un mode particulier de réalisation de l'invention ;
- la figure 5a représente un message de demande d'établissement d'un arbre selon un mode particulier de réalisation de l'invention ;
- la figure 5b représente un message de réponse à une demande d'établissement selon un mode particulier de réalisation de l'invention.

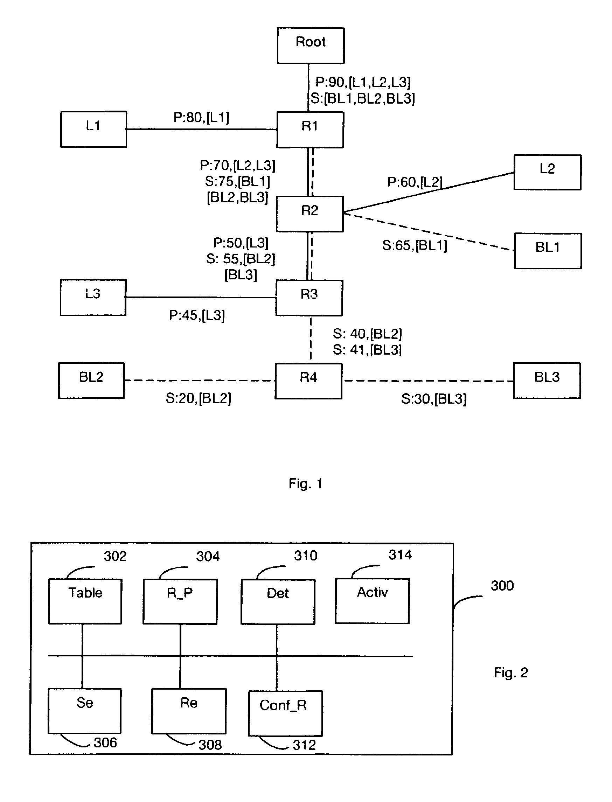

Sur la figure 1, on a représenté de façon schématique un réseau de communication. Ce réseau comprend une pluralité de noeuds d'acheminement, notés Root, R1 à R4. Le réseau comprend également trois noeuds feuilles L1 à L3, dit noeuds feuilles primaires, auxquels sont connectés des récepteurs non représentés. Un arbre point à multipoint permet de diffuser des canaux diffusés ou multicast d'un noeud racine Root aux noeuds feuilles primaires par l'intermédiaire de branches, appelées par la suite branches primaires. Cet arbre est représenté sur la figure 1 par des traits pleins. Du noeud racine Root est issue une branche primaire vers le noeud R1. Du noeud R1 sont issues deux branches primaires, la première vers le noeud feuille primaire L1, la seconde vers le noeud R2. Du noeud R2 sont issues deux branches primaires, la première vers le noeud feuille primaire L2, la seconde vers le noeud R3. Du noeud R3 est issue une branche primaire vers le noeud feuille primaire L3.

Par convention, on appelle branche en amont une branche par laquelle un noeud reçoit une demande de protection d'un arbre point à multipoint, et branche en aval, une branche de l'arbre par laquelle un noeud transmet la demande de protection à d'autres noeuds. Des noeuds sont situés en aval d'un premier noeud lorsqu'ils se situent dans l'arborescence de l'arbre issue de ce premier noeud.

Afin de protéger un noeud feuille primaire L1 à L3 en cas de panne l'affectant, il est prévu pour chaque noeud feuille primaire un noeud feuille de secours associé BL1 à BL3. Le noeud feuille de secours BL1 (respectivement BL2, respectivement BL3) est prévu pour acheminer le trafic d'un ensemble de canaux multicast vers l'ensemble de récepteurs connectés au noeud feuille primaire L1 (respectivement L2, respectivement L3), en cas de panne affectant ce dernier. Le noeud feuille de secours BL1 est connecté au noeud R2. Les noeuds feuilles de secours BL2 et BL3 sont connectés au noeud R4.

Selon l'invention, on adjoint à l'arbre point à multipoint des branches supplémentaires, dites branches de secours, permettant d'acheminer le trafic vers les noeuds feuilles de secours BL1-BL3. Ces branches de secours sont représentées en traits pointillés sur la figure 1. Elles ont pour origine des noeuds d'acheminement particuliers, appelés noeuds protecteurs. Ces noeuds protecteurs sont remarquables en ce qu'ils sont situés en amont de noeuds feuilles primaires et connectés directement à une ou des noeuds feuilles primaires. Ils sont ainsi aptes à détecter une panne du ou des noeuds feuilles primaires dans des délais permettant de minimiser l'impact de pannes sur les services diffusés. A titre d'exemple, pour une interface de type "Synchronous digital hierarchy" ou SDH, le noeud protecteur est apte à détecter une panne en moins de 5 millisecondes. Du noeud R1, protecteur du noeud feuille primaire L1, est issue une branche de secours de l'arbre vers le noeud R2. Du noeud R2, protecteur du noeud feuille primaire L2, sont issues deux branches de secours, une première vers le noeud feuille de secours BL1, une seconde vers le noeud R3. Du noeud R3, protecteur du noeud feuille de secours L3, est issue une branche de secours vers le noeud R4. Du noeud R4 sont issues deux branches de secours permettant de joindre les noeuds feuilles de secours BL2 et BL3. Seuls les noeuds R1, R2 et R3 jouent un rôle de noeud protecteur de noeuds feuilles primaires de l'arbre point à multipoint.

En mode nominal, seules les branches de l'arbre primaire sont actives et ainsi seuls les noeuds feuilles primaires transmettent les paquets relatifs aux canaux multicast vers l'ensemble des récepteurs.

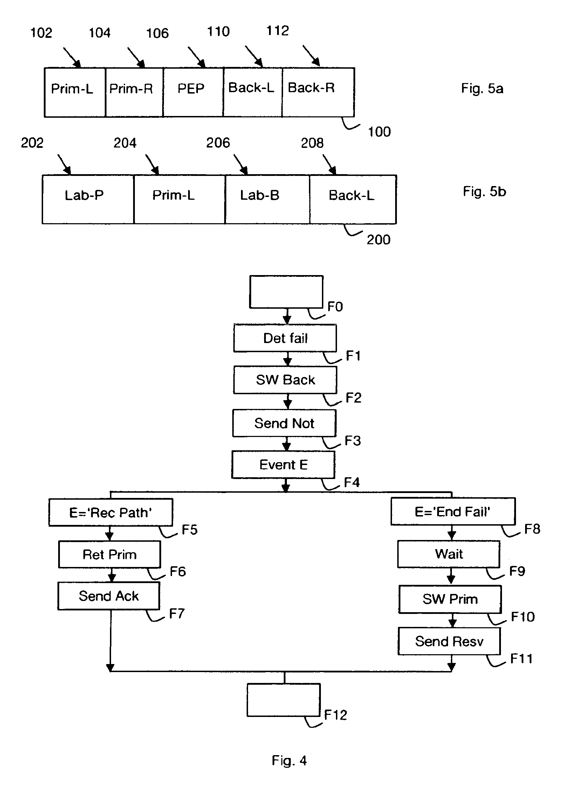

Sur la figure 5a, on a représenté un message 100 de demande d'établissement d'un arbre point à multipoint. Par exemple, dans le protocole RSVP-TE, il s'agit d'un message "Path".

Un tel message 100 comprend des paramètres nécessaires à l'établissement des branches primaires de l'arbre, notamment une liste 102 de noeuds feuilles primaires, une liste 104 de chemins explicites vers les noeuds feuilles primaires.

Selon l'invention, il peut comprendre en outre :
- un champ 106 indiquant que l'arbre point à multipoint doit être établi selon le procédé de protection décrit ci-après, appelé mécanisme PEP, pour P2MP Egress Protection ;
- une liste 110 de noeuds feuilles de secours, identifiés par exemple par leurs adresses dans le réseau de communication, chaque noeud de secours étant associé à un noeud feuille primaire respectif ;
- une liste 112 de chemins explicites vers les noeuds feuilles de secours.

Ainsi, la demande d'établissement de l'arbre point à multipoint telle que décrite précédemment requiert outre un établissement des branches primaires de l'arbre du noeud racine vers les noeuds feuilles primaires, un établissement des branches de secours de l'arbre, établies vers des noeuds feuilles de secours, destinées à protéger les noeuds feuilles primaires. Il s'agit d'une demande de protection de l'arbre, en cas de panne affectant un des noeuds feuilles primaires, par des branches de secours vers des noeuds feuilles de secours situés en aval du noeud recevant la demande de protection, un noeud feuille de secours étant associé à un noeud feuille primaire.

Par exemple, dans le protocole RSVP-TE, le champ 106 peut être transporté dans l'objet RSVP-TE appelé "LSP_Attribute" défini dans le document RFC 4420. La liste 110 des noeuds feuilles de secours peut être transportée dans un nouvel objet RSVP-TE appelé "Backup S2L_SUB_LSP", comprenant un identifiant du noeud feuille de secours et un identifiant du noeud feuille primaire protégé. La liste 112 des chemins explicites vers les noeuds feuilles de secours peut être transportée dans un nouvel objet RSVP-TE appelé "BACKUP EXPLICIT_ROUTE" (respectivement "BACKUP RECORD_ROUTE") et "BACKUP P2MP SECONDARY_EXPLICIT_ROUTE" (respectivement "BACKUP P2MP SECONDARY_RECORD_ROUTE") ayant respectivement le même format que les objets "EXPLICIT_ROUTE" (resp. "RECORD_ROUTE") et "SECONDARY EXPLICIT ROUTE" (resp. " SECONDARY_RECORD_ROUTE") définis dans le document RFC 4875.

Sur la figure 5b, on a représenté un message 200. Ce message peut être une réponse à la demande 100 d'établissement de l'arbre point à multipoint. Par exemple, dans le protocole RSVP-TE, il s'agit d'un message "Resv".

Un tel message 200 peut comprendre :
- une liste 202 de noeuds feuilles primaires et une étiquette 204 primaire associée ;
- une liste 206 de noeuds feuilles de secours et, pour chaque noeud feuille de secours protégeant un noeud feuille primaire qui n'est pas situé en aval, une étiquette 208 de secours associée.

Le message 200 peut également comprendre un champ, non représenté, permettant d'indiquer que le mécanisme de protection PEP est déclenché. A titre d'exemple, il est possible de prévoir un nouvel attribut dans le sous-objet « RRO Attributes» de l'objet RECORD-ROUTE et Backup RECORD_ROUTE, tels que spécifiés dans la RFC 4420.

Nous allons maintenant décrire le procédé de protection tel qu'il est mis en oeuvre par le noeud R1 du réseau de communication.

Dans une étape E1 de réception d'une demande d'établissement d'un arbre point à multipoint, le noeud R1 reçoit en provenance d'un noeud une demande 100 d'établissement d'un arbre point à multipoint comprenant une liste 102 de noeuds feuilles primaires situés en aval, une liste 104 de chemins explicites permettant de joindre les noeuds feuilles primaires, un champ 106 indiquant que l'arbre point à multipoint doit être établi selon le mécanisme PEP, une liste 110 de noeuds feuilles de secours, un noeud feuille de secours étant associé à un noeud feuille primaire, une liste 112 de chemins explicites vers les noeuds feuilles de secours. Ce message correspond à une demande de protection de l'arbre primaire, en cas de panne affectant un des noeuds feuilles primaires de la liste 102, par des branches de secours vers des noeuds feuilles de secours situés en aval dudit noeud, un noeud feuille de secours étant associé à un noeud feuille primaire à protéger.

A l'étape E4, le noeud R1 détermine s'il est un noeud d'extrémité de l'arbre point à multipoint.

Si le noeud ayant reçu la demande d'établissement n'est pas un noeud d'extrémité de l'arbre, il détermine à partir de la demande reçue une liste de noeuds vers lesquels il doit propager la demande d'établissement de l'arbre et envoie dans une étape E5 à chacun d'entre eux une nouvelle demande d'établissement 100 adaptée. Il s'agit là du mode de traitement d'une demande d'établissement tel que décrit pour le mécanisme RSVP-TE dans le document RFC 4875, adapté au traitement de deux listes, une de noeuds feuilles primaires et leurs chemins respectifs, l'autre de noeuds feuilles de secours et leurs chemins respectifs. A titre d'exemple, le noeud R1 transmet au noeud feuille primaire L1 une demande d'établissement d'une branche primaire et au noeud d'acheminement R2 une demande d'établissement de branches primaires vers les noeuds feuilles primaires L2 et L3 et de branches de secours vers les noeuds feuilles de secours BL1, BL2, BL3.

Le noeud R1 attend alors de recevoir des réponses aux demandes d'établissement transmises.

Dans une étape E6, le noeud R1 reçoit une réponse 200 à une demande d'établissement transmise par exemple au noeud R2, comprenant :
- une liste 202 de noeuds feuilles primaires (L2, L3) et une étiquette 204 primaire associée (70), notées P:70,[L2,L3] sur la figure 1, et
- une liste 206 de noeuds feuilles de secours, comprenant une étiquette 208 de secours associée (75) au noeud feuille de secours BL1, notée S:75,[BL1] sur la figure 1, et une liste des noeuds feuilles de secours en aval protégeant des noeuds feuilles primaires en aval, notée [BL2,BL3] sur la figure 1.

Dans une étape E7 de configuration, le noeud R1 mémorise dans une table d'acheminement 302 une branche primaire (70,R2) et une branche de secours (75,R2).

Dans une étape E8, le noeud R1 vérifie s'il a reçu toutes les réponses aux demandes d'établissement transmises. Tant que toutes les réponses n'ont pas été reçues, le procédé réitère les étapes E6 à E8.

Dans l'exemple particulier de la figure 1, dans une nouvelle itération de l'étape E6, le noeud R1 reçoit une réponse 200 du noeud feuille primaire L1 comprenant uniquement une étiquette primaire (80) associée à cette branche primaire. A l'étape E7, il mémorise dans la table d'acheminement 302 une branche primaire (80, L1).

Lorsque toutes les réponses aux demandes d'établissement transmises ont été reçues, dans une étape E9 d'affectation d'étiquettes, le noeud affecte une étiquette primaire, s'il est situé sur l'arbre primaire, et au moins une étiquette de secours. Plus précisément, il affecte une étiquette de secours pour chaque noeud feuille de secours en aval protégeant un noeud feuille primaire qui n'est pas situé en aval. Le noeud mémorise dans la table d'acheminement 302, dans une étape E10 de configuration, outre une règle d'acheminement primaire, une règle d'acheminement de secours, cette règle étant désactivée et associant à l'étiquette primaire la branche de secours en aval associée et le cas échéant, la ou les branches primaires en aval non affectées par la panne et n'empruntant pas le même lien physique que la branche de secours. Dans le cas particulier du noeud R1, il affecte une étiquette primaire (90) et mémorise dans sa table d'acheminement 302, une règle d'acheminement primaire, activée, associant l'étiquette primaire (90) aux deux branches primaires (70, R2) et (80, L1). Etant noeud protecteur du noeud L1, il mémorise également une règle d'acheminement de secours, désactivée et associée à la règle d'acheminement primaire, associant à l'étiquette primaire (90) la branche de secours (75, R2). Cette règle d'acheminement de secours est destinée à être activée en cas de panne affectant le noeud feuille primaire L1. Dans le cas particulier du noeud R1, étant donné qu'il n'a pas de noeuds feuilles de secours en aval protégeant un noeud feuille primaire qui n'est pas situé en aval, il n'alloue pas d'étiquette de secours.

Toujours à l'étape E10 de configuration, le noeud prévoit en outre au moins une règle d'acheminement secondaire dans la table d'acheminement 302, cette règle étant activée et associant à une des étiquettes de secours affectée la branche de secours en aval associée et la ou les branches primaires en aval.

A l'issue de ces étapes de configuration E1 à E10, un noeud d'acheminement, a suivant les cas comme règles dans sa table d'acheminement 302 :
- si le noeud a uniquement des noeuds feuilles de secours en aval, une ou des règles secondaires activées permettant d'acheminer des paquets reçus avec une des étiquettes de secours vers la branche de secours correspondante ;
- si le noeud a à la fois des noeuds feuilles primaires et de secours en aval,
   ■ une règle primaire activée permettant d'acheminer des paquets reçus avec l'étiquette primaire vers les branches primaires de l'arbre,
   ■ une ou des règles secondaires activées permettant d'acheminer des paquets reçus avec une des étiquettes de secours vers la branche de secours correspondante et la ou les branches primaires en aval,
- et si le noeud est également un noeud protecteur d'un noeud feuille primaire, une règle de secours associée à la règle primaire, désactivée, permettant d'acheminer des paquets reçus avec l'étiquette primaire vers la branche de secours et le cas échéant, vers la ou les branches primaires en aval, non affectées par la panne et n'empruntant pas le même lien physique que la branche de secours.

Le noeud d'acheminement est alors dans un mode de fonctionnement dit nominal.

Puis, dans une étape E11 de réponse au noeud ayant émis la demande d'établissement, le noeud transmet une réponse 200 à la demande d'établissement transmise par le noeud en amont, comprenant :
- une liste 202 de noeuds feuilles primaires et une étiquette 204 primaire associée (70), et
- une liste 206 de noeuds feuilles de secours, comprenant une ou des étiquettes 208 de secours associée à un ou des noeuds feuilles de secours protégeant un noeud feuille primaire qui n'est pas situé en aval, et une liste des noeuds feuilles de secours en aval protégeant des noeuds feuilles primaires en aval.

Dans le cas particulier du noeud R1, il transmet, au noeud racine Root, une réponse 200 comprenant la liste 202 des noeuds feuilles primaires (L1, L2, L3) et une étiquette 204 primaire associée (90), notées P:90,[L1,L2,L3] sur la figure 1.

Dans le cas d'un noeud ayant au moins un noeud feuille de secours en aval et pour lequel le noeud feuille primaire n'est pas situé en aval, par exemple le noeud R2, à l'étape E11 de réponse, le noeud R2 transmet, au noeud R1, une réponse 200 comprenant :
- la liste 202 des noeuds feuilles primaires (L2, L3) et une étiquette 204 primaire associée (70), notée P:70,[L2,L3] sur la figure 1 ;
- la liste 206 des noeuds feuilles de secours en aval, comprenant
   ■ les deux noeuds feuilles de secours BL2 et BL3, notée [BL2, BL3] sur la figure 1, ces noeuds feuilles de secours protégeant des noeuds feuilles primaires en aval,
   ■ le noeud feuille de secours BL1 et une étiquette 208 de secours (55) associée, noté S: 75, [BL1] sur la figure 1, le noeud feuille de secours BL1 protégeant le noeud feuille primaire L1, qui n'est pas situé en aval.

La demande d'établissement de l'arbre primaire se propage ainsi de noeud en noeud dans l'arborescence du noeud racine jusqu'aux noeuds d'extrémité des branches primaires et des branches de secours. Puis, la réponse se propage dans le sens inverse des noeuds d'extrémité jusqu'au noeud racine. A l'issue de ces étapes de configuration E1 à E11, les tables d'acheminement respectives des noeuds de l'arbre sont configurées et les noeuds protecteurs sont configurés pour permettre l'acheminement du trafic en cas de panne affectant un noeud feuille primaire, grâce à leurs règles d'acheminement de secours respectives, c'est-à-dire en réacheminant le trafic reçu sur une branche primaire en amont sur la branche de secours et le cas échéant, la ou les branches primaires en aval non affectées par la panne et n'empruntant pas un même lien physique que la branche de secours. Les branches primaires et de secours étant raccordées à une même arborescence, le procédé est particulièrement avantageux en ce qu'il limite la consommation en ressources de bande passante et également en états RSVP à mémoriser dans les noeuds.

Si à l'étape E4, on a déterminé que le noeud ayant reçu la demande d'établissement est un noeud d'extrémité de l'arbre, le procédé de protection passe directement à l'étape E9 d'affectation d'étiquettes.

Le procédé de protection, tel qu'il est ensuite mis en oeuvre par un noeud protecteur, va maintenant être décrit en relation avec la figure 4.

Dans une étape F0, le noeud protecteur R1 supervise le noeud feuille primaire L1. Il est dans le mode de fonctionnement nominal. Par exemple, dans le cas particulier du noeud R1, dans le plan de transfert, les paquets reçus avec l'étiquette primaire (90) sont transmis à destination du noeud d'acheminement R2 avec l'étiquette primaire (70) et à destination du noeud feuille primaire L1 avec l'étiquette primaire (80).

Dans une étape F1 de détection de panne, le noeud protecteur R1 détecte une panne affectant le noeud feuille primaire L1. Etant donné qu'il est directement raccordé à ce dernier, il est apte à détecter cette panne dans des délais compatibles avec des services exigeant un taux de coupure très faible.

Dans une étape F2, le noeud protecteur R1 passe dans un mode de fonctionnement dit de secours. En d'autres termes, le noeud protecteur R1 active la règle de secours et désactive la règle primaire dans la table d'acheminement 302. A l'issue de cette étape F2, dans le cas particulier du noeud R1, dans le plan de transfert, les paquets reçus avec l'étiquette primaire (90) sont transmis à destination du noeud d'acheminement R2 avec l'étiquette de secours (75).

Puis, dans une étape F3, le noeud protecteur R1 transmet au noeud racine Root une notification de la panne affectant le noeud feuille primaire L1. Dans le protocole RSVP-TE, il peut s'agir d'un message "Resv", comprenant une indication que le mécanisme PEP est déclenché, un identifiant du noeud feuille primaire tombé en panne et une liste des noeuds feuilles de secours activés (c'est-à-dire ceux qui sont en train de recevoir du trafic par l'intermédiaire des branches de secours de l'arbre).

Si on se place maintenant au niveau du noeud R2, ce dernier reçoit dans le plan de transfert des paquets auxquels l'étiquette de secours (75) est associée. Etant donné que sa propre table d'acheminement 302 comprend une règle secondaire activée permettant d'acheminer les paquets reçus avec l'étiquette de secours (75) vers la branche de secours en aval et la branche primaire en aval, le trafic est ainsi acheminé pendant la panne à destination du noeud feuille de secours BL1 et ainsi des récepteurs de L1. Les noeuds feuilles primaires situés en aval de ce noeud continuent à recevoir le trafic. Le trafic est alors acheminé à destination du noeud feuille de secours activé en aval et à l'ensemble des noeuds feuilles primaires en aval.

La détection de la panne et le passage sur l'arbre de secours, c'est-à-dire le réacheminement des paquets, s'effectuent en moins de cinquante millisecondes. Il est à noter que seul le noeud protecteur R1 doit modifier les états d'activation de ses règles primaire et de secours. Les autres noeuds de l'arbre n'ont aucune action à effectuer pour permettre l'acheminement du trafic, leurs règles secondaires respectives étant activées de façon permanente.

Puis, dans une étape F4, le noeud protecteur R1 détecte un évènement.

Si l'évènement est la détection de la fin de la panne, étape F8, le noeud protecteur R1 déclenche une temporisation d'attente dans une étape F9 et attend son expiration. Lorsque la temporisation expire, sans que la panne ne soit survenue de nouveau, dans une étape F10, le noeud protecteur R1 repasse dans un mode de fonctionnement nominal, c'est-à-dire désactive la règle de secours et active la règle primaire. Le trafic rebascule ainsi sur les branches primaires de l'arbre en aval.

Puis, dans une étape F11, le noeud protecteur R1 indique au noeud racine qu'il est bien revenu en mode nominal.

De retour à l'étape F4, si l'évènement détecté est une réception d'un message demandant un retour au mode nominal, en provenance du noeud racine Root, étape F5, le noeud protecteur R1 désactive la règle de secours et active la règle primaire. Puis dans une étape F7, il envoie au noeud racine une confirmation du retour au mode nominal.

En effet, le noeud racine Root, ayant reçu une notification de la panne affectant le noeud feuille primaire L1, est informé de la panne et est apte à modifier l'arbre en lui adjoignant un nouveau noeud feuille primaire destinée à remplacer le noeud feuille primaire défaillant. Lorsque le noeud protecteur de ce nouveau noeud feuille primaire est identique à celui du noeud feuille primaire défaillant, il suffit de retourner au mode nominal. Dans le cas contraire, le noeud racine peut envoyer à un nouveau noeud protecteur de ce nouveau noeud feuille primaire une demande de protection par un ou des branches de secours.

La description du procédé de protection a été faite dans le cadre d'une protection de l'ensemble des noeuds feuilles primaires par un ensemble de noeuds feuilles de secours. Il est également possible de prévoir que seul un sous-ensemble des noeuds feuilles primaires soit protégé.

Dans le mode de réalisation décrit précédemment, la demande de protection de l'arbre, en cas de panne affectant un des noeuds feuilles primaires à protéger, par une ou des branches de secours vers des noeuds feuilles de secours (BL1-BL3) situés en aval du noeud est portée par une demande d'établissement de l'arbre primaire et des branches de secours.

Il est également possible de disjoindre les demandes d'établissement de l'arbre primaire et des branches de secours l'une de l'autre. Le contenu de la demande d'établissement 100 est alors adapté en conséquence. Il est également possible d'établir la protection dans une phase ultérieure à l'établissement de l'arbre primaire et des branches de secours.

A titre d'exemple non limitatif et tel que cela est illustré schématiquement sur la figure 1, il est possible d'appliquer le procédé de protection sur les différents noeuds du réseau de communication tel que représenté. On se place par la suite dans la phase de propagation des réponses aux demandes d'établissement.

Le noeud R4 reçoit deux réponses : S:20,[BL2] et S:30,[BL3] en provenance respectivement des noeuds feuilles de secours BL2 et BL3. Il alloue au cours de l'étape E9 deux étiquettes de secours (40 et 41), configure à l'étape E10 sa table d'acheminement et transmet S:40,[BL2] et S:41,[BL3] au noeud R3. La table d'acheminement du noeud R4 comprend deux règles secondaires activées permettant d'acheminer le trafic reçu avec l'étiquette (40) vers le noeud BL2 avec l'étiquette 20 et le trafic reçu avec l'étiquette (41) vers le noeud BL3 avec l'étiquette 30, notées {40: (20,BL2)} et {41: (30,BL3)}.

Le noeud R3 reçoit deux réponses : S:40,[BL2], S:41,[BL3] en provenance du noeud R4 et P:45,[L3] en provenance du noeud feuille primaire L3. Il alloue au cours de l'étape E9 l'étiquette primaire (50) et l'étiquette de secours (55), configure à l'étape E10 sa table d'acheminement et transmet P:50,[L3], S:55,[BL2], [BL3] au noeud R2. La table d'acheminement du noeud R3 comprend une règle primaire activée {50,(45,L3)}, une règle de secours désactivée {50: (41,R4)} et une règle secondaire activée {55: (40,R4),(45,L3)}.

Le noeud R2 reçoit trois réponses : P:50,[L3], S:55,[BL2] et [BL3] en provenance du noeud R3, P:60,[L2] en provenance du noeud feuille primaire L2 et S:65,[BL1] en provenance du noeud feuille de secours BL1. Il alloue au cours de l'étape E9 l'étiquette primaire (70) et l'étiquette de secours (75), configure à l'étape E10 sa table d'acheminement et transmet P:70,[L2,L3], S:75,[BL1] et [BL2,BL3] au noeud R1. La table d'acheminement du noeud R2 comprend une règle primaire activée {70,(50,R3),(60,L2)}, une règle de secours désactivée {70: (55,R3)} et une règle secondaire activée {75: (50,R3),(65,BL1), (60,L2)}.

Le noeud R1 reçoit deux réponses : P:70,[L2,L3], S:75,[BL1] et [BL2,BL3] en provenance du noeud R2 et P:80,[L1] en provenance du noeud feuille primaire L1. Il alloue au cours de l'étape E9 l'étiquette primaire (90), configure à l'étape E10 sa table d'acheminement et transmet P:90,[L1,L2,L3] et S: [BL1,BL2,BL3] au noeud racine. La table d'acheminement du noeud R1 comprend une règle primaire activée {90,(70,R2),(80,L1)}, une règle de secours désactivée {90, (75,R2)}.

Le cas d'une panne du noeud feuille primaire L1 a plus particulièrement été décrit précédemment lors de la description du procédé de protection.

Un autre cas de panne va être décrit maintenant, par exemple la panne du noeud feuille primaire L2. Dans ce cas, le noeud protecteur R2 détecte la panne, désactive la règle primaire et active la règle de secours, c'est-à-dire que les paquets reçus sur la branche primaire en amont, issue du noeud R1, sont acheminés vers la branche de secours dans sa partie issue du noeud R2, c'est-à-dire la partie en aval.

Si une panne du noeud feuille primaire L1 survient également, le noeud protecteur R1 va également basculer en mode de secours et les paquets sont alors acheminés sur la branche de secours dans sa partie issue du noeud R1. Lors d'un retour au mode nominal du noeud R1, suite à une détection d'une fin de panne de L1. le noeud protecteur R2 n'a pas été impacté par les modifications liée à la panne affectant le noeud feuille primaire L1 et est toujours en mode de secours. L'acheminement des paquets à destination des récepteurs est effectué correctement.

De même, si la panne du noeud feuille primaire L2 se termine avant celle du noeud feuille primaire L1, le noeud protecteur R1 n'est pas impacté par le retour au mode nominal du noeud protecteur R2. L'acheminement des paquets à destination des récepteurs est effectué correctement.

Il est possible de combiner une protection Fast Reroute du lien entre deux noeuds d'acheminement, tel que spécifié dans le document de l'IETF "P2MP Fast Reroute", "draft-ietf-mpls-p2mp-te-bypass-01", et le procédé de protection tel que défini précédemment.

La figure 2 représente un noeud 300 d'un réseau de communication.

Le noeud comprend :
- la table d'acheminement 302, notée "Table" sur la figure 2, agencée pour mémoriser des règles d'acheminement, activées ou non ;
- des moyens 304 d'acheminement de paquets, notés "R_P" sur la figure 2, agencés pour acheminer des paquets en fonction de règles d'acheminement, mémorisées dans la table 302 d'acheminement ;
- un module 306 d'envoi dans le plan de commande de messages selon un protocole donné, noté "Se" sur la figure 2 ;
- un module 308 de réception dans le plan de commande de messages selon le protocole donné, noté "Re" sur la figure 2 ;
- un module 310 de détection de début et de fin de panne, noté "Det" sur la figure 2, agencé pour détecter une panne affectant un noeud donné.

Dans le mode particulier décrit, les modules 306 et 308 mettent en oeuvre le protocole RSVP-TE, conformément à la RFC 4875.

Un noeud du réseau de communication jouant le rôle de noeud protecteur en cas de panne affectant un noeud feuille primaire d'un arbre primaire point à multipoint est remarquable en ce que :
- le module 308 de réception est agencé pour recevoir en provenance d'un autre noeud du réseau, dit noeud amont, une demande de protection de l'arbre primaire par une branche de secours vers un noeud feuille de secours situé en aval dudit noeud, en cas de panne affectant ledit noeud feuille primaire à protéger, le noeud feuille de secours étant associé au noeud feuille primaire :
- il comprend un module 312 de configuration d'une règle d'acheminement dans la table d'acheminement, noté "Conf_R" sur la figure 2, agencé pour configurer une règle d'acheminement de secours, ladite règle visant à acheminer des paquets en provenance d'une branche primaire en amont vers une branche de secours en aval et le cas échéant, vers la ou les branches primaires en aval, et étant prévue pour être activée en cas de panne affectant ledit noeud feuille primaire à protéger.

Le module 312 est également agencé pour configurer une règle d'acheminement primaire, ladite règle visant à acheminer des paquets en provenance d'une branche primaire en amont vers la ou les branches primaires en aval.

Le module 312 est également agencé pour configurer une ou des règles secondaires, permettant d'acheminer des paquets reçus avec une des étiquettes de secours vers la branche de secours correspondante et la ou les branches primaires en aval.

Il comprend également un module 314 d'activation de règle, noté "Activ" sur la figure 2, agencé pour activer une règle d'acheminement de secours et désactiver une règle d'acheminement primaire en fonction d'une panne détectée par le module 310 de détection de panne. Le module 314 est en outre agencé pour activer la règle d'acheminement primaire et désactiver la règle d'acheminement de secours, suite à une demande du noeud racine ou en cas de détection de fin de la panne par le module 310.

Dans un mode de réalisation, la demande de protection est une demande d'établissement d'un arbre point à multipoint comprenant une liste de noeuds feuilles primaires situés en aval, une liste de chemins explicites permettant de joindre les noeuds feuilles primaires, un champ indiquant que l'arbre point à multipoint doit être établi selon le mécanisme PEP, une liste de noeuds feuilles de secours, un noeud feuille de secours étant associé à un noeud feuille primaire, une liste de chemins explicites vers les noeuds feuilles de secours.

Le module 306 d'envoi peut en outre être agencé pour envoyer au noeud racine en cas de détection d'une panne affectant un noeud feuille primaire à protéger, une notification de cette panne au noeud racine de l'arbre primaire.

Les modules 306, 308, 312, 314 du noeud protecteur sont agencés pour mettre en oeuvre le procédé de protection précédemment décrit. Il s'agit de préférence de modules logiciels comprenant des instructions logicielles pour faire exécuter les étapes du procédé de protection précédemment décrit, mises en oeuvre par un noeud du réseau de communication. L'invention concerne donc aussi :
- un programme pour noeud d'un réseau de communication, comprenant des instructions de programme destinées à commander l'exécution de celles des étapes du procédé de protection précédemment décrit qui sont exécutées par ledit noeud, lorsque ledit programme est exécuté par celui-ci ;
- un support d'enregistrement lisible par un noeud d'un réseau de communication sur lequel est enregistré le programme pour noeud d'un réseau de communication.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système de communication dans un réseau de communication en mode connecté comprenant :
- au moins un noeud racine, ledit noeud étant la racine d'un arbre primaire point à multipoint vers des noeuds feuilles primaires, comprenant des moyens d'envoi, agencés pour envoyer une demande de protection de l'arbre primaire par des branches de secours vers des noeuds feuilles de secours situés en aval dudit noeud, en cas de panne affectant un des noeuds feuilles primaires à protéger, un noeud feuille de secours étant associé à un noeud feuille primaire ;
- au moins un noeud protecteur tel que décrit précédemment ;
- des noeuds feuilles primaires et de secours.

On notera que la description a été faite dans le cas particulier d'un réseau de communication MPLS, supportant le protocole RSVP-TE. Toutefois, ce procédé peut être mis en oeuvre dans d'autres types de réseaux de communication, dès lors qu'il est possible d'établir dans ce réseau des connexions avec réservation de ressources. Il s'agit de réseaux de transport de paquets en mode connecté. A titre d'exemple, un réseau de communication ATM, pour "Asynchronous Transfer Mode", supportant le protocole PNNI-ATM, pour " Asynchronous Transfer Mode Signaling Private Network-to-Network Interface", permet d'établir de telles connexions. Ainsi, un message de demande d'établissement d'un arbre point à multipoint avec réservation de ressources correspond à un message "Setup" et un message de confirmation d'établissement correspond à un message "Connect" par exemple.

## Revendications

1. Procédé de protection dans un réseau de communication en mode connecté d'un arbre primaire point à multipoint entre un noeud racine et des noeuds feuilles primaires (L1-L3) du réseau, en cas de panne affectant un des noeuds feuilles primaires, comprenant les étapes suivantes mises en oeuvre par un noeud (R1-R3) du réseau :
- une étape (E1) de réception, en provenance d'un autre noeud du réseau, dit noeud amont, d'une demande de protection de l'arbre primaire par au moins une branche de secours vers un noeud feuille de secours (BL1-BL3) du réseau situé en aval dudit noeud, en cas de panne affectant au moins un des noeuds feuilles primaires à protéger, le noeud feuille de secours étant associé au noeud feuille primaire à protéger,
- si le noeud est situé en amont d'au moins un noeud feuille de secours, une étape (E10) de configuration d'au moins une règle d'acheminement secondaire activée, ladite règle visant à acheminer des paquets en provenance d'une branche de secours en amont vers la branche de secours en aval et le cas échéant, des branches primaires en aval,
et, si le noeud est raccordé directement au noeud feuille primaire à protéger en aval, une étape (E10) de configuration d'une règle d'acheminement de secours, ladite règle visant à acheminer des paquets en provenance d'une branche primaire en amont vers une branche de secours en aval et le cas échéant, une ou des branches primaires en aval n'empruntant pas le même lien physique que la branche de secours en aval, et étant prévue pour être activée en cas de panne affectant ledit noeud feuille primaire à protéger.

2. Procédé de protection selon la revendication 1, dans lequel, une demande d'établissement de la branche de secours est associée à la demande de protection, l'étape de configuration étant effectuée lorsque la branche de secours issue dudit noeud est établie vers un noeud en aval.

3. Procédé de protection selon la revendication 2, dans lequel, une demande d'établissement de l'arbre primaire est associée à la demande de protection, l'étape de configuration étant effectuée lorsqu'au moins une branche primaire issue dudit noeud est établie vers un noeud en aval.

4. Procédé de protection selon la revendication 1, comprenant en outre, en cas de détection (F1) d'une panne affectant ledit noeud feuille primaire à protéger, une étape (F3) de notification de ladite panne au noeud racine de l'arbre primaire.

5. Noeud protecteur (R1-R3, 300) dans un réseau de communication en mode connecté d'un arbre primaire point à multipoint entre un noeud racine et des noeuds feuilles primaires du réseau, en cas de panne affectant un des noeuds feuilles primaires, comprenant :
- des moyens (308) de réception, en provenance d'un autre noeud du réseau, dit noeud amont, agencés pour recevoir une demande de protection de l'arbre par une branche de secours vers un noeud feuille de secours du réseau situé en aval dudit noeud, en cas de panne affectant ledit noeud feuille primaire à protéger, le noeud feuille de secours étant associé au noeud feuille primaire à protéger;
- des moyens (310) de configuration, agencés pour configurer une règle d'acheminement de secours lorsque ledit noeud est raccordé directement à un noeud feuille primaire, ladite règle visant à acheminer des paquets en provenance d'une branche primaire en amont vers une branche de secours en aval, et le cas échéant, des branches primaires en aval n'empruntant pas le même lien physique que la branche de secours en aval, et étant prévue pour être activée en cas de panne affectant ledit noeud feuille primaire à protéger,
les moyens de configuration étant en outre agencés pour configurer au moins une règle d'acheminement secondaire activée lorsque ledit noeud est situé en amont d'au moins un noeud feuille de secours, ladite règle visant à acheminer des paquets en provenance d'une branche de secours en amont vers la branche de secours en aval et le cas échéant, des branches primaires en aval.

6. Noeud protecteur selon la revendication 5, comprenant en outre des moyens (306) de notification, agencés pour envoyer au noeud racine de l'arbre primaire, en cas de détection d'une panne affectant un noeud feuille primaire à protéger, une notification de ladite panne.

7. Système de communication dans un réseau de communication en mode connecté comprenant :
- au moins un noeud racine, ledit noeud racine étant la racine d'un arbre primaire point à multipoint vers des noeuds feuilles primaires, comprenant des moyens d'envoi, agencés pour envoyer une demande de protection de l'arbre primaire par une branche de secours vers un noeud feuille de secours situé en aval dudit noeud racine, en cas de panne affectant un des noeuds feuilles primaires à protéger, le noeud feuille de secours étant associé au noeud feuille primaire à protéger ;
- au moins un noeud protecteur selon la revendication 5 ;
- des noeuds feuilles primaires et de secours.

8. Programme d'ordinateur comportant des instructions pour la mise en oeuvre du procédé de protection selon la revendication 1 par un noeud d'un réseau de communication en mode connecté, lorsque ce programme est exécuté par un processeur.

## Claims

1. Method of protection in a communication network in connected mode of a point-to-multipoint primary tree between a root node and primary leaf nodes (L1-L3) of the network, in the case of a fault affecting one of the primary leaf nodes, comprising the following steps implemented by a node (R1-R3) of the network:
- a step (E1) of receiving, from another node of the network, termed an upstream node, a request for protection of the primary tree by at least one backup branch towards a backup leaf node (BL1-BL3) of the network situated downstream of the said node, in the case of a fault affecting at least one of the primary leaf nodes to be protected, the backup leaf node being associated with the primary leaf node to be protected,
- if the node is situated upstream of at least one backup leaf node, a step (E10) of configuring at least one activated secondary routing rule, the said rule being aimed at routing packets originating from an upstream backup branch towards the downstream backup branch and if appropriate, downstream primary branches, and, if the node is linked directly to the primary leaf node to be protected downstream, a step (E10) of configuring a backup routing rule, the said rule being aimed at routing packets originating from an upstream primary branch towards a downstream backup branch and if appropriate, one or more downstream primary branches not following the same physical link as the downstream backup branch, and being designed to be activated in the case of a fault affecting the said primary leaf node to be protected.

2. Method of protection according to Claim 1, in which a request for establishing the backup branch is associated with the request for protection, the configuration step being performed when the backup branch arising from the said node is established towards a downstream node.

3. Method of protection according to Claim 2, in which a request for establishing the primary tree is associated with the request for protection, the configuration step being performed when at least one primary branch arising from the said node is established towards a downstream node.

4. Method of protection according to Claim 1, furthermore comprising, in the case of detection (F1) of a fault affecting the said primary leaf node to be protected, a step (F3) of notifying the said fault to the root node of the primary tree.

5. Protector node (R1-R3, 300) in a communication network in connected mode of a point-to-multipoint primary tree between a root node and primary leaf nodes of the network, in the case of a fault affecting one of the primary leaf nodes, comprising:
- means (308) of reception, from another node of the network, termed an upstream node, designed to receive a request for protection of the tree by a backup branch towards a backup leaf node of the network situated downstream of the said node, in the case of a fault affecting the said primary leaf node to be protected, the backup leaf node being associated with the primary leaf node to be protected,
- configuration means (310), designed to configure a backup routing rule when the said node is linked directly to a primary leaf node, the said rule being aimed at routing packets originating from an upstream primary branch towards a downstream backup branch, and if appropriate, downstream primary branches not following the same physical link as the downstream backup branch, and being designed to be activated in the case of a fault affecting the said primary leaf node to be protected,
the configuration means furthermore being designed to configure at least one activated secondary routing rule when the said node is situated upstream of at least one backup leaf node, the said rule being aimed at routing packets originating from an upstream backup branch towards the downstream backup branch and if appropriate, downstream primary branches.

6. Protector node according to Claim 5, furthermore comprising notification means (306), designed to dispatch to the root node of the primary tree, in the case of detection of a fault affecting a primary leaf node to be protected, a notification of the said fault.

7. Communication system in a communication network in connected mode comprising:
- at least one root node, the said root node being the root of a point-to-multipoint primary tree towards primary leaf nodes, comprising dispatching means, designed to dispatch a request for protection of the primary tree by a backup branch towards a backup leaf node situated downstream of the said root node, in the case of a fault affecting one of the primary leaf nodes to be protected, the backup leaf node being associated with the primary leaf node to be protected;
- at least one protector node according to Claim 5;
- primary and backup leaf nodes.

8. Computer program comprising instructions for the implementation of the method of protection according to Claim 1 by a node of a communication network in connected mode, when this program is executed by a processor.

## Patentansprüche

1. Verfahren zum Schutz, in einem Kommunikationsnetz im Online-Modus, eines Punkt-zu-Mehrpunkt-Primärbaums zwischen einem Wurzelknoten und Primärblattknoten (L1-L3) des Netzes im Fall einer sich auf einen der Primärblattknoten auswirkenden Störung, das die folgenden Schritte enthält, die von einem Knoten (R1-R3) des Netzes ausgeführt werden:
- einen Schritt (E1) des Empfangs, ausgehend von einem anderen Knoten des Netzes, vorgeschalteter Knoten genannt, einer Anforderung zum Schutz des Primärbaums durch mindestens einen Ersatzzweig zu einem dem Knoten nachgeschalteten Ersatzblattknoten (BL1-BL3) des Netzes im Fall einer sich auf mindestens einen der zu schützenden Primärblattknoten auswirkenden Störung, wobei der Ersatzblattknoten dem zu schützenden Primärblattknoten zugeordnet ist,
- wenn der Knoten mindestens einem Ersatzblattknoten vorgeschaltet ist, einen Schritt (E10) der Konfiguration mindestens einer aktivierten Sekundärleitregel, wobei die Regel zum Zweck hat, von einem vorgeschalteten Ersatzzweig kommende Pakete zum nachgeschalteten Ersatzzweig, und ggf. zu nachgeschalteten Primärzweigen, zu leiten,
und, wenn der Knoten direkt mit dem nachgeschalteten zu schützenden Primärblattknoten verbunden ist, einen Schritt (E10) der Konfiguration einer Ersatzleitregel, wobei die Regel zum Zweck hat, von einem vorgeschalteten Primärzweig kommende Pakete zu einem nachgeschalteten Ersatzzweig, und ggf. einem oder mehreren nachgeschalteten Primärzweigen zu leiten, die nicht die gleiche physikalische Verbindung benutzen wie der nachgeschaltete Ersatzzweig, und vorgesehen ist, um im Fall einer sich auf den zu schützenden Primärblattknoten auswirkenden Störung aktiviert zu werden.

2. Schutzverfahren nach Anspruch 1, bei dem eine Anforderung zum Aufbau des Ersatzzweigs der Schutzanforderung zugeordnet ist, wobei der Konfigurationsschritt ausgeführt wird, wenn der vom Knoten stammende Ersatzzweig zu einem nachgeschalteten Knoten aufgebaut wird.

3. Schutzverfahren nach Anspruch 2, bei dem eine Anforderung zum Aufbau des Primärbaums der Schutzanforderung zugeordnet ist, wobei der Konfigurationsschritt ausgeführt wird, wenn mindestens ein vom Knoten stammender Primärzweig zu einem nachgeschalteten Knoten aufgebaut wird.

4. Schutzverfahren nach Anspruch 1, das außerdem im Fall der Erfassung (F1) einer sich auf den zu schützenden Primärblattknoten auswirkenden Störung einen Schritt (F3) der Mitteilung der Störung an den Wurzelknoten des Primärbaums enthält.

5. Schutzknoten (R1-R3, 300) in einem Kommunikationsnetz im Online-Modus eines Punkt-zu-Mehrpunkt-Primärbaums zwischen einem Wurzelknoten und Primärblattknoten des Netzes, im Fall einer sich auf einen der Primärblattknoten auswirkenden Störung, der enthält:
- Empfangseinrichtungen (308), von einem anderen Knoten des Netzes, vorgeschalteter Knoten genannt, die eingerichtet sind, um im Fall einer sich auf den zu schützenden Primärblattknoten auswirkenden Störung eine Anforderung zum Schutz des Baums durch einen Ersatzzweig zu einem dem Knoten nachgeschalteten Ersatzblattknoten des Netzes zu empfangen, wobei der Ersatzblattknoten dem zu schützenden Primärblattknoten zugeordnet ist;
- Konfigurationseinrichtungen (310), die eingerichtet sind, um eine Ersatzleitregel zu konfigurieren, wenn der Knoten direkt mit einem Primärblattknoten verbunden ist, wobei die Regel zum Zweck hat, von einem vorgeschalteten Primärzweig kommende Pakete zu einem nachgeschalteten Ersatzzweig, und ggf. nachgeschalteten Primärzweigen, zu leiten, die nicht die gleiche physikalische Verbindung benutzen wie der nachgeschaltete Ersatzzweig, und vorgesehen ist, um im Fall einer sich auf den zu schützenden Primärblattknoten auswirkenden Störung aktiviert zu werden,
wobei die Konfigurationseinrichtungen außerdem eingerichtet sind, um mindestens eine aktivierte Sekundärleitregel zu konfigurieren, wenn der Knoten mindestens einem Ersatzblattknoten vorgeschaltet ist, wobei die Regel zum Zweck hat, von einem vorgeschalteten Ersatzzweig kommende Pakete zum nachgeschalteten Ersatzzweig, und ggf. zu nachgeschalteten Primärzweigen, zu leiten.

6. Schutzknoten nach Anspruch 5, der außerdem Mitteilungseinrichtungen (306) enthält, die eingerichtet sind, um im Fall der Erfassung einer sich auf einen zu schützenden Primärblattknoten auswirkenden Störung eine Mitteilung der Störung an den Wurzelknoten des Primärbaums zu senden.

7. Kommunikationssystem in einem Kommunikationsnetz im Online-Modus, das enthält:
- mindestens einen Wurzelknoten, wobei der Wurzelknoten die Wurzel eines Punkt-zu-Mehrpunkt-Primärbaums zu Primärblattknoten ist, der Sendeeinrichtungen enthält, die eingerichtet sind, um im Fall einer sich auf einen der zu schützenden Primärblattknoten auswirkenden Störung eine Anforderung zum Schutz des Primärbaums durch einen Ersatzzweig zu einem dem Wurzelknoten nachgeschalteten Ersatzblattknoten zu senden, wobei der Ersatzblattknoten dem zu schützenden Primärblattknoten zugeordnet ist;
- mindestens einen Schutzknoten nach Anspruch 5;
- Ersatz- und Primärblattknoten.

8. Computerprogramm, das Anweisungen zur Durchführung des Schutzverfahrens nach Anspruch 1 durch einen Knoten eines Kommunikationsnetzes im Online-Modus aufweist, wenn dieses Programm von einem Prozessor ausgeführt wird.
